# EUROPEAN PATENT SPECIFICATION

(11) **EP 4 357 934 B1**
(45) Date of publication and mention of the grant of the patent: **29.04.2026**
(21) Application number: 22889222.0
(22) Date of filing: 31.10.2022
(51) Int. Cl.: G09B 7/07

(54) **CLASSROOM ACTIVITY COURSEWARE PRODUCING METHOD AND APPARATUS, AND STORAGE MEDIUM AND ELECTRONIC DEVICE**
VERFAHREN UND VORRICHTUNG ZUR ERZEUGUNG VON KURSBEWUSSTEN KLASSENZIMMERAKTIVITÄTEN SOWIE SPEICHERMEDIUM UND ELEKTRONISCHE VORRICHTUNG
PROCÉDÉ ET APPAREIL DE PRODUCTION DE DIDACTICIEL D'ACTIVITÉ DE SALLE DE CLASSE, SUPPORT DE STOCKAGE ET DISPOSITIF ÉLECTRONIQUE

(30) Priority: 02.11.2021 CN 202111288246
(43) Date of publication of application: 24.04.2024
(73) Proprietor: Guangzhou Shiyuan Electronic Technology Company Limited, Guangzhou, Guangdong 510530 (CN); Guangzhou Shirui Electronics Co., Ltd., Guangzhou, Guangdong 510663 (CN)
(72) Inventor: LIU, Chengbiao, Guangzhou, Guangdong 510530 (CN)
(74) Representative: Grünecker Patent- und Rechtsanwälte PartG mbB
(86) International application number: PCT/CN2022/128502
(87) International publication number: WO 2023/078197

(56) References cited:
- WO-A1-2019/200705
- CN-A- 105 488 015
- CN-A- 107 463 537
- CN-A- 109 947 836
- CN-A- 110 222 327
- CN-A- 111 832 263
- US-A1- 2009 063 491

## Description

### FIELD

The present disclosure relates to the field of producing a courseware, and in particular to a method for producing courseware of a classroom activity, and apparatus thereof, and storage medium, and electronic device.

### BACKGROUND

Questions play an important role in testing and consolidating teaching results in a teaching process. In traditional teaching, teachers usually present in form of PPT pages, but the PPT pages are too single, lack of interactivity, and lack of interest. As an interactive teaching method, interactive classroom activities have been widely used because of their strong interactivity and interest. CN111832263A relates to the creation and editing of teaching materials, including multiple-choice question, fill-in-the-blank question, and short-answer question, within an e-textbook.

In order to achieve interactivity and interest, classroom activity courseware usually needs to set multiple operating regions. In some technologies, when the classroom activity courseware is produced, teachers need to manually edit content in each operating region of the classroom activity courseware one by one. For example, during producing classroom activity courseware of selecting words and filling blanks, the teacher needs to copy text of a question, and then manually hollow out blanks one by one, and fill the blanks with correct answers. The above methods are complicated to be operated, high in operation cost, and low in efficiency of courseware production.

### SUMMARY

In order to overcome the problems existing in related technologies, the present disclosure provides a method for producing courseware of a classroom activity, and apparatus thereof, and storage medium, and electronic device, which can reduce the cost of courseware production and improve the efficiency of courseware production.

According to a first aspect of an embodiment of the present disclosure, a method for producing courseware of a classroom activity is provided, which includes the following steps:
on a platform for producing the courseware of the classroom activity, in response to a triggering operation for producing of the courseware of the classroom activity displaying a page of producing the courseware, and acquiring a target courseware-type identifier;
acquiring text content of a question input on the page of producing the courseware;
based on the target courseware-type identifier, acquiring a target structured analysis strategy correspondingly;
based on the target structured analysis strategy, analyzing the text content of the question to acquire structured text content of the classroom activity; and
based on the structured text content of the classroom activity, generating the courseware of the classroom activity .

According to a second aspect of an embodiment of the present disclosure, an apparatus for producing courseware of a classroom activity is provided, which includes:
a page displaying module, configured to, on a platform for producing the courseware of the classroom activity, in response to a triggering operation for producing the courseware of the classroom activity, display a page of producing courseware, and acquire a target courseware-type identifier;
a question-text-content acquiring module, configured to acquire text content of a question input on the page of producing the courseware;
an analysis-strategy acquiring module, configured to, based on the target courseware-type identifier, acquire a target structured analysis strategy correspondingly;
a structured-analysis module, configured to, based on the target structured analysis strategy, analyze the text content of the question to acquire structured text content of the classroom activity; and
a classroom-activity-courseware generating module, configured to, based on the structured text content of the classroom activity, generate the courseware of the classroom activity.

According to a third aspect of an embodiments of the present disclosure, an electronic device is provided, which includes a processor and a memory; the memory stores computer program, and the computer program is adapted to be loaded by the processor and execute the above-mentioned method for producing courseware of a classroom activity.

According to a fourth aspect of an embodiments of the present disclosure, a computer-readable storage medium is provided, on which computer program is stored, when the computer program is executed by a processor, the above-mentioned method for producing courseware of a classroom activity is performed.

In an embodiment of the present disclosure, on a platform for producing the courseware of the classroom activity, in response to a triggering operation for producing the courseware of the classroom activity, a page of producing the courseware is displayed, and a target courseware-type identifier is acquired; text content of a question input on the page of producing the courseware is acquired; based on the target courseware-type identifier, a corresponding target structured analysis strategy is acquired; based on the target structured analysis strategy, the text content of the question is analyzed to acquire structured text content of the classroom activity; and based on the structured text content of the classroom activity, the courseware of the classroom activity is generated. Teachers only need to input the text content of the question without manually editing content of each operation region of the classroom activity one by one, and then the classroom activity courseware is automatically generated. The operation is simple and convenient, which reduces the cost of courseware production and improves the efficiency of the courseware production.

It should be understood that both the above-mentioned general description and the following detailed description are illustrative and explanatory only, which does not limit the present disclosure.

For better understanding and implementation, the present disclosure will be described in detail below in conjunction with the accompanying drawings.

### BRIEF DESCRIPTION OF THE DRAWINGS

In order to more clearly illustrate the technical solutions in embodiments of the present disclosure or the prior art, the following will briefly introduce the drawings that need to be used in the description of embodiments or the prior art. Obviously, the accompanying drawings in the following description are only some embodiments of the present disclosure. Those skilled in the art can also obtain other drawings based on these drawings without creative work.
Fig. 1 is a display effect diagram of a PPT page according to an embodiment of the present disclosure.
Fig. 2 is a display effect diagram of courseware of a classroom activity according to an embodiment of the present disclosure.
Fig. 3 is a schematic diagram of producing a classroom activity of selecting words and filling blanks according to some technologies.
Fig. 4 is a schematic diagram of producing a classroom activity of a choice question according to some technologies.
Fig. 5 is a flowchart of a method for producing courseware of a classroom activity according to an embodiment of the present disclosure.
Fig. 6 is a flowchart of a method for acquiring structured text content of a question according to an embodiment of the present disclosure.
Fig. 7 is a schematic diagram of text content of a question input on a page of producing the courseware when courseware of selecting words and filling blanks is produced according to an embodiment of the present disclosure.
Fig. 8 is a schematic diagram of structured text content of a classroom activity generated based on the text content of the question shown in Fig. 7.
Fig. 9 is a schematic diagram of the courseware of the classroom activity generated based on the structured text content of the classroom activity shown in Fig. 8.
Fig. 10 is a schematic diagram of the text content of the question input on the page of producing the courseware when courseware of selecting words and filling blanks is produced according to an embodiment of the present disclosure.
Fig. 11 is a schematic diagram of the structured text content of the classroom activity generated based on the text content of the question shown in Fig. 10.
Fig. 12 is a structural schematic block diagram of an apparatus for producing courseware of a classroom activity according to an embodiment of the present disclosure.
Fig. 13 is a structural schematic diagram of an electronic device according to an embodiment of the present disclosure.

### DESCRIPTION OF THE PREFERRED EMBODIMENTS

In order to make the purpose, technical solutions and advantages of the present disclosure clearer, the embodiments of the present disclosure will be further described in detail below in conjunction with the accompanying drawings.

It should be clear that the described embodiments are only some of the embodiments of the present disclosure, rather than all of the embodiments. Based on the embodiments in the embodiments of the present disclosure, all other embodiments obtained by those skilled in the art without making creative efforts belong to the protection scope of the embodiments of the present disclosure.

When the following description refers to the accompanying drawings, the same numerals in the various drawings refer to the same or similar elements unless otherwise indicated. In the description of the present disclosure, it should be understood that the terms "first", "second", "third", etc. are only used to distinguish similar objects, and are not necessarily used to describe a specific order or sequence, nor may they be understood as indicating or implying relative importance. Those skilled in the art may understand the specific meanings of the above terms in the present disclosure according to specific situations. As used in the present disclosure and the appended claims, the singular forms "a", "the", and "this" are intended to include the plural forms as well, unless the context clearly dictates otherwise. As used herein, the words "if"/"in a case" may be construed as "at the time" or "when" or "in response to a determination".

In addition, in the description of the present disclosure, unless otherwise specified, "plurality" means two or more. "And/or" describes the association relationship of associated objects, indicating that there may be three types of relationships, for example, A and/or B may indicate: A exists independently, A and B exist simultaneously, and B exists independently. The character "/" generally indicates that the contextual objects are an "or" relationship.

In order to better understand the technical solutions of the present disclosure, some technologies related to the present disclosure will be described as follows:

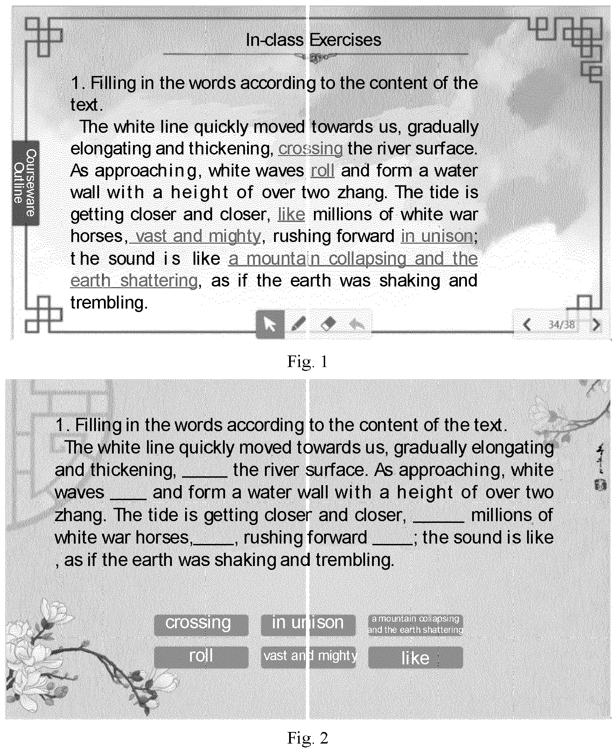

Questions play an important role in testing and consolidating teaching results in the teaching process. In traditional teaching, teachers usually present in form of PPT pages. As shown in Fig. 1, the teaching is realized by setting the fill-in-the-blank questions on the PPT page, in order to allow students to fill in the nouns in the blanks. However, the PPT page is too single, lacks interactivity, and lacks interest.

As an interactive teaching method, interactive classroom activities have been widely used because of their strong interactivity and interest. As shown in Fig. 2, taking courseware of a classroom activity of selecting words and filling blanks as an example, a teacher may drag words below to the corresponding blanks based on the answers of students, and prompts will pop up regardless of whether the words dragged into the blanks are correct or wrong, which increases teaching interactivity and interest.

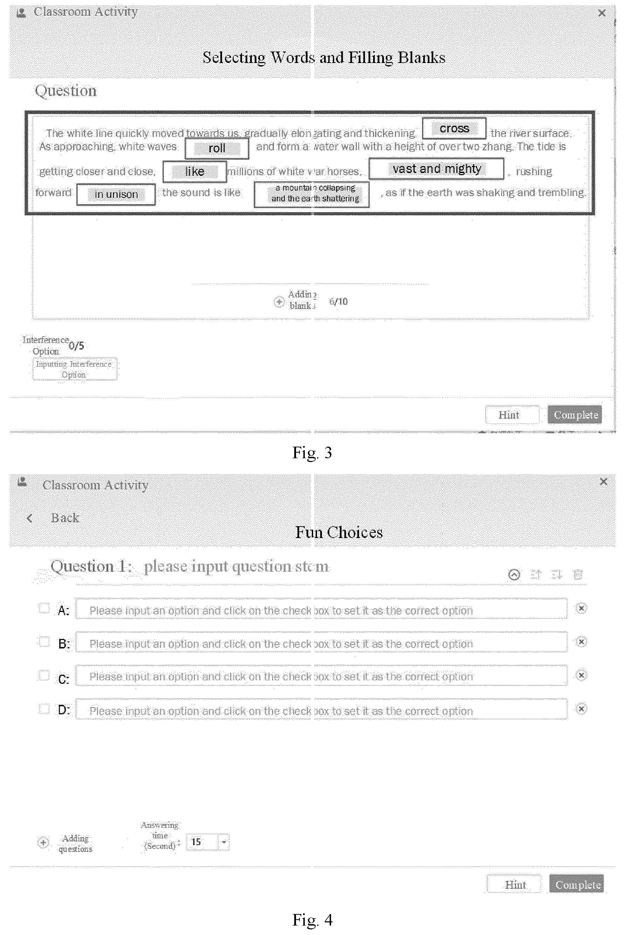

In order to achieve interactivity and interest, courseware of a classroom activity usually needs to be provided with multiple operating regions. In some technologies, when the courseware of the classroom activity is produced, teachers need to manually edit content of each operating region of classroom activity courseware. As shown in Fig. 3, when the courseware of the classroom activity for selecting words and filling blanks is produced, on a page of producing the courseware, after the teacher inputs text content of a question, he needs to manually click a control of add a blank one by one to create the blank and fill in a correct answer in the blank, and finally the effect shown in Fig. 2 can be generated. As shown in Fig. 4, when courseware of the classroom activity for choice questions is produced, on the page of producing the courseware, the teacher needs to input a question stem and options in the question stem region and option region respectively, and each time a choice question is completed, the teacher needs to click a control of adding a question, and then input the question stem and options in the new question stem region and option region respectively. The operation is complicated, the operation cost is high, and the production efficiency is low.

In order to better understand the technical solution of the present disclosure, the application environment of the present disclosure is described as follows:

The application environment of the method for producing courseware of a classroom activity in the embodiment of the present disclosure includes a courseware producing terminal for the classroom activity; the hardware pointed to by the courseware producing terminal for the classroom activity may be essentially a computer device with a personal computer equivalent capability, and have hardware device disclosed by the Theory of John Von Neumann such as central processing unit (including arithmetic unit and controller), memory, input device and output device. The computer program is stored in its memory, and the central processing unit will call a program stored in the external memory into the memory for running, execute the instructions in the program, and interact with the input and output devices to complete specific functions. Optionally, the courseware producing terminal for the classroom activity may be any terminal device such as a mobile phone, a tablet computer, PDA (Personal Digital Assistant), a smart TV, etc., which is not limited in the present disclosure. In the embodiment of the present disclosure, the courseware producing terminal for the classroom activity is an interactive board.

At least one type of operating system may be installed in the courseware producing terminal for the classroom activity, where the operating system includes but is not limited to Android system, Linux system and Windows system. The courseware producing terminal for the classroom activity may further be installed with at least one application program, where the application program may be an application program that comes with the operating system, or an application program downloaded from a third-party device or server. In the implementation of the present disclosure, the courseware producing terminal for the classroom activity is installed with a whiteboard application program, and the classroom activity courseware of the present disclosure may be produced through the whiteboard application program.

### Embodiment 1

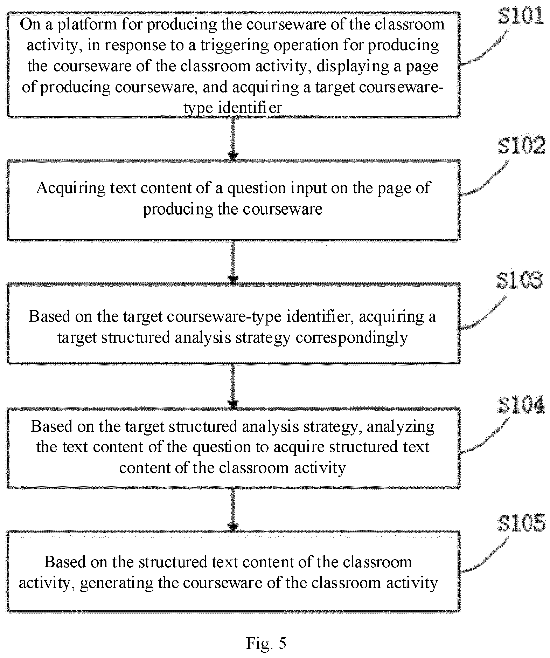

Hereinafter, the method for producing courseware of a classroom activity according to an embodiment of the present disclosure will be described in detail with reference to Figs. 5 to 11.

Referring to Fig. 5, the method for producing courseware for a classroom activity according to an embodiment of the present disclosure includes the following steps:
Step S101, on a platform for producing the courseware of the classroom activity, in response to a triggering operation for producing the courseware of the classroom activity, displaying a page of producing courseware, and acquiring a target courseware-type identifier.

The platform for producing the courseware of the classroom activity may be any element used to produce the courseware of the classroom activity of the present disclosure, for example, the platform for producing the courseware of the classroom activity may be a system, an application, a plug-in or a page, etc. In the embodiment of the present disclosure, the platform for producing the courseware of the classroom activity is a whiteboard application program. The device where the platform for producing the courseware of the classroom activity is located is the courseware producing terminal for the classroom activity, which may be mobile phones, tablets, computers and other devices. In the embodiment of the present disclosure, the courseware producing terminal for the classroom activity is an interactive board.

On the platform for producing the courseware of the classroom activity, there are multiple courseware types of production controls, such as: a classroom-activity producing control of selecting words and filling blanks, a classroom-activity producing control of judgment question, a classroom-activity producing control of multiple-choice question, and a classroom-activity producing control of interesting classification. The user may trigger the operation for producing classroom-activity courseware by clicking one of the producing controls.

A courseware type identifier is used to uniquely indicate a type of courseware to be produced, and the courseware type identifier is any character that may uniquely recognize the courseware type on the platform for producing the courseware of the classroom activity. For example, 0 may be set to a classroom activity of selecting words and filling blanks, 1 may be set to a classroom activity of judgment question, and 2 may be set to a classroom activity of multiple-choice question, etc. Each courseware-type producing control is associated with its own courseware type identifier. When the user clicks on one of the producing controls, the operation for producing classroom activity courseware is triggered, and at the same time, the target courseware type identifier corresponding to the producing control is acquired.

The page of producing the courseware for the classroom activity may include a question-text-content inputting region, and the user may input the text content of the question in the question-text-content inputting region. Optionally, the page of producing the courseware for the classroom activity further includes a recognition control, which is used to analyze the structured text content of the question when the user triggers the recognition control.

Step S102, acquiring text content of a question input on the page of producing the courseware.

The text content of the question may be the text content input by the user through writing tools such as keyboards, mouses or stylus pens. The text content of the question may also be the text content copied and pasted by the user, for example, the content copied and pasted from the PPT page. The text content of the question may also be picture content, for example, a picture obtained from a screenshot of a PPT page, etc. This is not limited in the present disclosure.

Step S103, based on the target courseware-type identifier, acquiring a target structured analysis strategy correspondingly.

Questions with different types of classroom activity have different corresponding structures, therefore, a corresponding structured analysis strategies will also be different.

In the embodiment of the present disclosure, the platform for producing the courseware of the classroom activity stores more than one courseware-type identifiers for the classroom activity and structured analysis strategies corresponding to each of the courseware type identifiers for the classroom activity. The based on the target courseware-type identifier, acquiring the target structured analysis strategy correspondingly in step S103 includes: based on the target courseware-type identifier, querying on the platform for producing the courseware of the classroom activity to acquire the target structured analysis strategy corresponding to the target courseware-type identifier for the classroom activity. The structured analysis strategy corresponding to each courseware-type identifier of the class activity is stored, in order that the corresponding target structured analysis strategy is quickly acquired, so that structured analysis for different types of questions is performed though different strategies and the required courseware of classroom activities is obtained.

Step S104, based on the target structured analysis strategy, analyzing the text content of the question to acquire structured text content of the classroom activity.

Generally, the text content of the question input on the page of producing the courseware is unstructured data. Unstructured data refers to data having irregular or incomplete data structure and having no predefined data model, which is inconvenient to be represented by using two-dimensional logic table of database. Unstructured data includes all formats of office documents, text, pictures, XML, HTML, various reports, images and audio/video information, etc. In contrast, structured data is data that is logically expressed and realized by a two-dimensional table structure, and is mainly stored and managed through a relational database. In the embodiment of the present disclosure, the structured text content of the classroom activity includes multiple structured filling regions, and each structured filling region stores corresponding text content. Correspondingly, the structured analysis strategy extracts the structured content from the unstructured text content of the question, and fills a corresponding structured filling region with the extracted structured content, so as to acquire the structured classroom activity text content.

Step S105, based on the structured text content of the classroom activity, generating the courseware of the classroom activity.

In the embodiment of the present disclosure, on the platform for producing the courseware of the classroom activity, in response to a triggering operation for producing the courseware of the classroom activity, a page of producing the courseware is displayed, and a target courseware-type identifier is acquired; the text content of a question input on the page of producing the courseware is acquired; based on the target courseware-type identifier, a corresponding target structured analysis strategy is acquired; based on the target structured analysis strategy, the text content of the question is analyzed to acquire the structured text content of the classroom activity; and based on the structured text content of the classroom activity, the courseware of the classroom activity is generated. Teachers only need to input the text content of the question without manually editing contents of each operation region of the classroom activity one by one, and then the classroom activity courseware is automatically generated. The operation is simple and convenient, which reduces the cost of courseware production and improves the efficiency of courseware production.

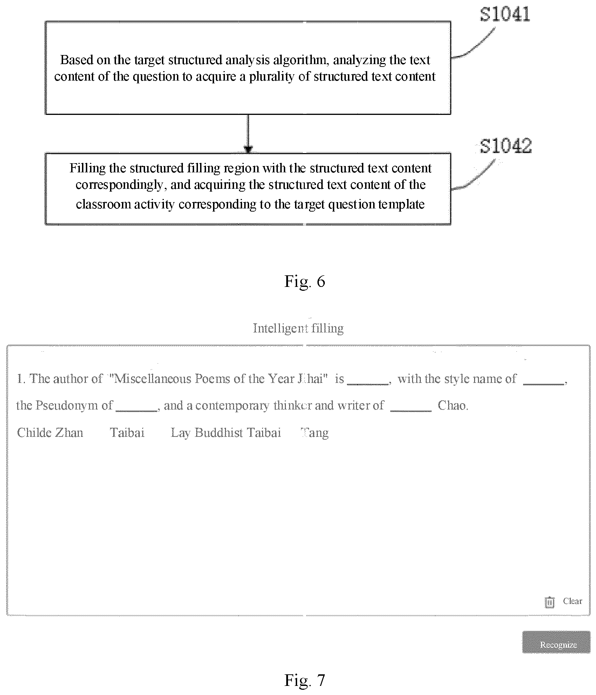

Referring to Fig. 6, in an embodiment, the target structured analysis strategy includes a target structured analysis algorithm and a target question template. The target question template includes more than one structured filling region. The based on the target structured analysis strategy, analyzing the text content of the question to acquire the structured text content of the classroom activity in step S104 includes:
Step S1041, based on the target structured analysis algorithm, analyzing the text content of the question to acquire a plurality of structured text content.
Step S1042, filling the structured filling region with the structured text content correspondingly, and acquiring the structured text content of the classroom activity corresponding to the target question template.

The courseware for different types of classroom activities has corresponding question templates, and more than one structured filling region are set on the question templates. In an embodiment, for the classroom activity of selecting words and filling blanks, it may be understood as structured text content including text content, spaces and words to be selected. That is, for the classroom activity of selecting words and filling blanks, it is equivalent to the structured text content obtained after in the text content filling region, the space filling region and the to-be-selected-word filling region are filled with the corresponding text content, spaces, and words to be selected. Thus, according to the present disclosure, a plurality of structured text content are acquired by analyzing the text content of the question, and then the corresponding structured filling region is filled with the structured text content, which can conveniently convert the unstructured text content of the question into the structured text content of classroom activity corresponding to the question template.

In an embodiment, when the target courseware-type identifier indicates a question of selecting words and filling blanks, the more than one structured filling region includes a question-stem-content filling region, a blank filling region and a to-be-selected-word filling region. The based on the target structured analysis algorithm, analyzing the text content of the question to acquire the plurality of structured text content in step S1041 includes:
Step S104111, recognizing the text content of the question, and acquiring the number of candidate fill-in placeholders preset in the text content of the question of each type.

Considering that different users have different ways of filling the blanks, for example, some users use underscores "_" to fill the blanks, and some users use brackets "()" to fill the blanks. Therefore, more than one type of candidate fill-in placeholders may be preset on the platform for producing the courseware of the classroom activity to further recognize which symbols are used as fill-in placeholders. The preset more than one type of candidate fill-in placeholders may be underscore "_", brackets "()", double quotation marks "", etc. The preset more than one type of candidate fill-in placeholders may be set according to actual needs, which will not be limited in the present disclosure.

Step S104112, based on the number of the candidate fill-in placeholders preset in the text content of the question of each type, calculating confidence scores of the candidate fill-in placeholders of each type.

The confidence score is used to indicate the probability of the candidate fill-in placeholder as the target fill-in placeholder, the higher the confidence score, the higher the probability of being the target fill-in placeholder; the lower the confidence score, the lower probability of being the target fill-in placeholder.

Optionally, the number of the candidate fill-in placeholders in the text content of the question of each type is used as the confidence score of the each type of the candidate fill-in placeholders.

Optionally, based on the preset priority scores of various types of candidate fill-in placeholders and the quantity of the candidate fill-in placeholders preset in the text content of the question of each type, calculating the confidence score of the candidate fill-in placeholders of each type. For example, a product of the preset priority scores of various candidate fill-in placeholders and the quantity of preset various candidate fill-in placeholders in the text content of the question is used as the confidence score of various candidate fill-in placeholders to improve the recognition accuracy of target fill-in placeholders.

Step S104113, determining the candidate fill-in placeholder with the highest confidence score as a the target fill-in placeholder, and acquiring position information of the target fill-in placeholder in the text content of the question.

Step S104114, in the text content of the question, hollowing out the position corresponding to the position information as a space, determining the text at the position corresponding to the position information as a word to be selected, and determining other text as content of the question stem to acquire the plurality of structured text content.

Optionally, in the text content of the question, the position corresponding to the position information may be filled with text, that is, the position corresponding to the position information is directly filled with the answer, therefore, the text at the position corresponding to the position information is directly used as the word to be selected. Optionally, there may be no filling text at the position corresponding to the position information, but the text behind the text content of the question, that is, the answer is filled in behind the text content of the question. Therefore, the text behind the text content of the question may be aligned with target fill-in placeholders as words to be selected.

The filling the structured filling region with the structured text content correspondingly, and acquiring the structured text content of tye classroom activity corresponding to the target question template in Step S1042 includes:
Step S10421, filling the question-stem-content filling region, the blank filling region and the to-be-selected-word filling region with the content of the question stem, the space and the word to be selected respectively, and acquiring the structured text content of the classroom activity corresponding to the target question-template content.

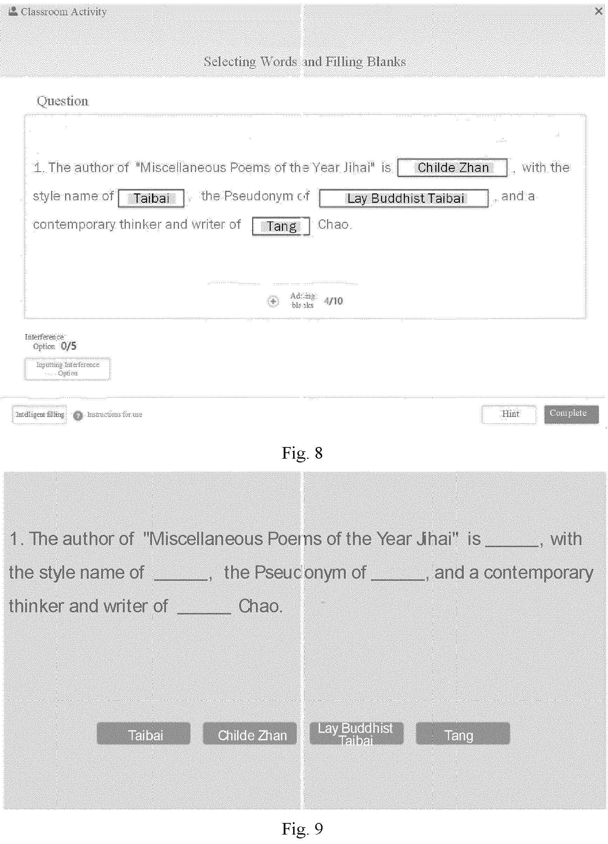

Referring to Fig. 7, after the text content of the question is input on the page of producing the courseware, by clicking the recognition control on the page of producing the courseware, the candidate fill-in placeholder with the highest confidence score is set as an underscore "_", and then the underscore "_" is used as the target fill-in placeholder, so that the underscore "_" is placed in the position information of the text content of the question, and then the position corresponding to the position information is hollowed out as a space, and the text "Childe Zhan" and "Taibai", "Lay Buddhist Taibai", "Tang" behind the text content of the question are aligned with the underscores "_" in sequence, as the words to be selected, other texts are used as the content of the question stem ; and then, the question-stem-content filling region, the space filling region, and the to-be-selected-word filling region are filled with the content of the question stem , space, and word to be selected, to acquire the structured text content of the classroom activity corresponding to the target question template as shown in Fig. 8; finally, it is converted into the courseware of the classroom activity as shown in Fig. 9.

In the embodiment of the present disclosure, the candidate fill-in placeholder with the highest confidence score is used as the target fill-in placeholder, and the position information of the target fill-in placeholder in the text content of the question is acquired, and furthermore, in the text content of the question, the position corresponding to the position information is hollowed out as a space, the text at the position corresponding to the position information is used as the word to be selected, and other text are used as the content of the question stem to acquire a plurality of structured text content, and thus, the question-stem-content filling region, the space filling region and the to-be-selected-word filling region are filled with the content of the question stem , the space and the word to be selected respectively, and the structured text content of the question is acquired, and then, a plurality of structured text content corresponding to the question of selecting words and filling blanks are automatically generated, thereby improving the efficiency of producing the courseware of the classroom activity.

In an embodiment, when the target courseware-type identifier indicates a multiple-choice question; the more than one structured filling region includes a question-stem-content filling region, an option-content filling region and an answer-content filling region. The based on the target structured analysis algorithm, analyzing the text content of the question to acquire the plurality of structured text content in step S1041 includes:
Step S104121, recognizing the text content of the question, and acquiring the number of questions and initial position and end position of each question.
Step S104122, acquiring the text content of each question based on the number of questions and the initial position and the end position of each question.
Step S104123, structurally analyzing the text content of the each question to acquire a content of a question stem, option content and answer content of the each question.

Optionally, based on the text features of the text content of the each question, natural language processing technology and rule strategies may be used to split the text content of the each question, and then the content of the question stem, option content and answer content are acquired.

Optionally, in the text content of the question, the answer of each question may be in the same region as the question stem and the options. For this reason, the answer content may be directly recognized in the same region. Optionally, in the text content of the question, the answer may be in the same region as the question stem and options, but at the end of the text content of the question. For this reason, the answer content at the end of the text content of the question may be aligned with the questions in sequence, the corresponding answer content of each question is recognized and acquired.

The filling the structured filling region with the structured text content correspondingly, and acquiring the structured text content of the classroom activity corresponding to the target question template in Step S1042 includes:
Step S10422, filling the question-stem-content filling region, the option-content filling region and the answer-content filling region with the content of the question stem, the option content and the answer content respectively, and acquiring the structured text content of the classroom activity corresponding to the target question template.

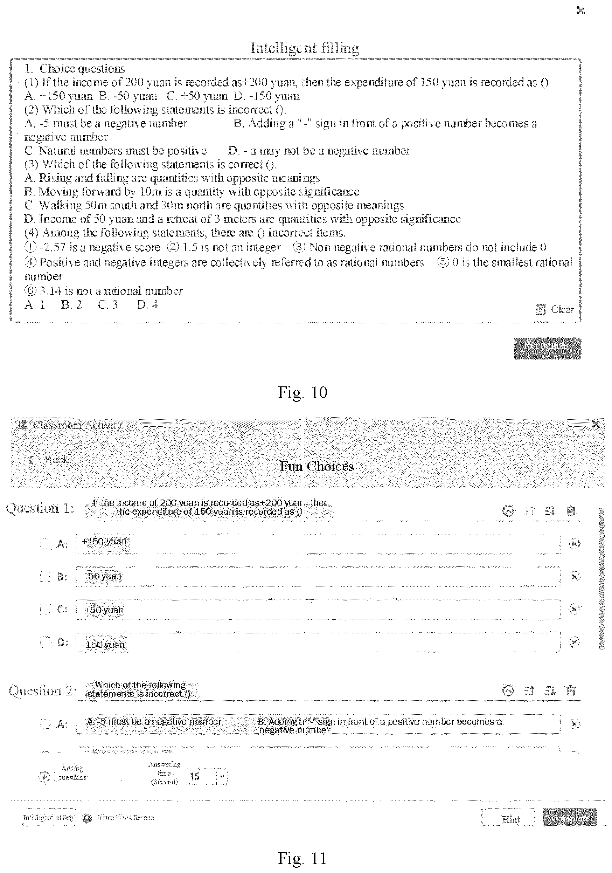

Referring to Fig. 10, after the text content of the question is input on the page of producing the courseware, by clicking the recognition control on the page of producing the courseware, the content of the question stem, option content and answer content of each question are acquired; and then the question-stem-content filling region, the option-content filling region and the answer-content filling region are filled with the content of the question stem, the option content and the answer content to acquire the structured text content of the classroom activity corresponding to the target question template as shown in Fig. 11.

In the embodiment of the present disclosure, by performing structural analysis on the text content of each question, the content of the question stem, option content and answer content of each question are acquired, and then the question-stem-content filling region, the option-content filling region and the answer-content filling region are filled with the content of the question stem, the option content and the answer content, and thus a plurality of structured text content corresponding to the choice question is automatically generated, thereby improving the efficiency of producing the courseware of the classroom activity .

In an embodiment, when the courseware type identifier indicates a judgment question; the more than one structured filling regions include a question-stem-content filling region and an answer-content filling region. The based on the target structured analysis algorithm, analyzing the text content of the question to acquire the plurality of structured text content in step S1041 includes:
Step S104131, recognizing the text content of the question, and acquiring the number of questions and initial position and end position of each question.
Step S10432, acquiring the text content of the each question based on the number of questions and the initial position and the end position of each question.
Step S10433, structurally analyzing the text content of the each question to acquire a content of a question stem and answer content of the each question.

Optionally, based on the text features of the text content of the each question, natural language processing technology and rule strategies may be used to split the text content of the each question, and then the content of the question stem, option content and answer content are acquired.

Optionally, in the text content of the question, the answer of the each question may be in the same region as the question stem and the options. For this reason, the answer content may be directly recognized in the same region. Optionally, in the text content of the question, the answer may be in the same region as the question stem and options, but at the end of the text content of the question. For this reason, the answer content at the end of the text content of the question may be aligned with questions in sequence, the corresponding answer content of the each question is recognized and acquired.

The filling the structured filling region with the structured text content correspondingly, and acquiring the structured text content of the classroom activity corresponding to the target question template in Step S1042 includes:
Step S10423, filling the question-stem-content filling region, the option-content filling region and the answer-content filling region with the content of the question stem, the option content and the answer content respectively, and acquiring the structured text content of the classroom activity corresponding to the target question template.

In the embodiment of the present disclosure, by performing structural analysis on the text content of the each question, the content of the question stem and answer content of each question are acquired, and then the question-stem-content filling region and the answer-content filling region are filled with the question stem content, the option content and the answer content, and thus a plurality of structured text content corresponding to the judgement question is automatically generated, thereby improving the efficiency of producing the courseware of the classroom activity.

### Embodiment 2

The following is an apparatus embodiment of the present disclosure, which may be used to implement the content of the method in the Embodiment 1 of the present disclosure. Reference is made to the content of the method in the Embodiment 1 of the present disclosure for details, which are not disclosed in the apparatus embodiment of the present disclosure.

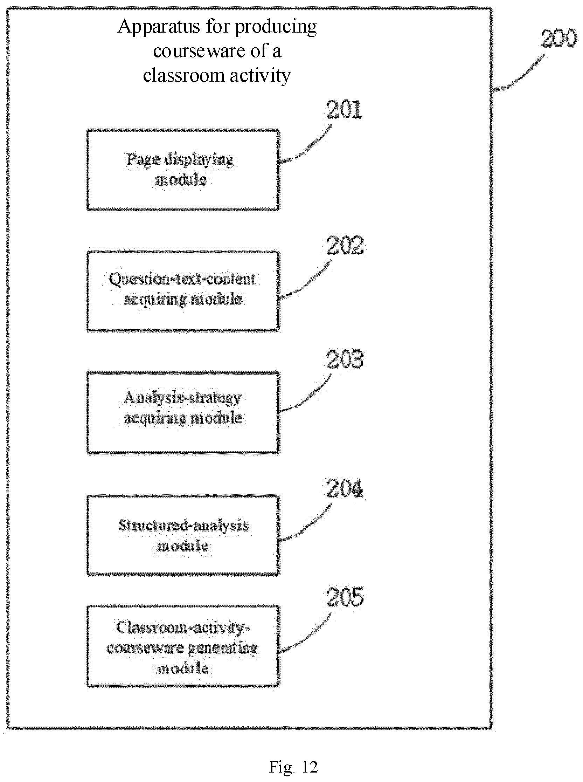

Referring to Fig. 12, according to an embodiment of the present disclosure, an apparatus for producing courseware of a classroom activity 200 is provided, including:
a page displaying module 201, configured to on a platform for producing the courseware of the classroom activity, in response to a triggering operation for producing the courseware of the classroom activity, display a page of producing courseware, and acquire a target courseware-type identifier;
a question-text-content acquiring module 202, configured to acquire a text content of a question input on the page of producing the courseware;
an analysis-strategy acquiring module 203, configured to, based on the target courseware-type identifier, acquire a target structured analysis strategy correspondingly;
a structured-analysis module 204, configured to, based on the target structured analysis strategy, analyze the text content of the question and acquire structured text content of the classroom activity; and
a classroom-activity-courseware generating module 205, configured to, based on the structured text content of the classroom activity, generate the courseware of the classroom activity.

In an embodiment of the present disclosure, on a platform for producing the courseware of the classroom activity, in response to a triggering operation for producing courseware of a classroom activity, a page of producing courseware is displayed, and a target courseware-type identifier is acquired; text content of a question input on the page of producing the courseware is acquired; based on the target courseware-type identifier a corresponding target structured analysis strategy is acquired; based on the target structured analysis strategy, the text content of the question is analyzed to acquire the structured text content of the classroom activity; and based on the structured text content of the classroom activity, classroom activity courseware is generated. Teachers only need to input the text content of the question without manually editing contents of each operation region of the classroom activity one by one, and then the classroom activity courseware is automatically generated. The operation is simple and convenient, which reduces the cost of courseware production and improves the efficiency of courseware production.

In an embodiment, the target structured analysis strategy includes a target structured analysis algorithm and a target question template. The target question template includes more than one structured filling region. The structured-analysis module 204 includes:
a structured-text-content acquiring module, configured to, based on the target structured analysis algorithm, analyzing the text content of the question to acquire a plurality of structured text content.
a structured-question-test-content acquiring module, configured to fill the structured filling region with the structured text content correspondingly, and acquire the structured text content of the classroom activity corresponding to the target question template.

In an embodiment, when the target courseware-type identifier indicates a question of selecting words and filling blanks, the more than one structured filling region includes a question-stem-content filling region, a blank filling region and a to-be-selected-word filling region. The structured-question-test-content acquiring module includes:
a placeholder-quantity acquiring module, configured to recognize the text content of the question, and acquire the number of candidate fill-in placeholders preset in the text content of the question of each type.
a confidence-score calculating module, configured to, based on the number of candidate fill-in placeholders preset in the text content of the question of each type, calculate confidence scores of the candidate fill-in placeholders of each type.
a position-information acquiring module, configured to determining the candidate fill-in placeholder with the highest confidence score as a target fill-in placeholder, and acquire position information of the target fill-in placeholder in the text content of the question.
a first text-content acquiring module, configured to, in the text content of the question, hollow out the position corresponding to the position information as a space, determine the text at the position corresponding to the position information as a word to be selected, and determine other text as content of the question stem to acquire the plurality of structured text content.

The structured-question-test-content acquiring module includes a first question-text acquiring module, and the first question-text acquiring module is configured to fill the question-stem-content filling region, the space filling region and the to-be-selected-word filling region with the content of the question stem , the space and the word to be selected respectively, and acquire the structured text content of the classroom activity corresponding to the target question template.

In an embodiment, when the target courseware-type identifier indicates a choice question; the more than one structured filling region includes a question-stem-content filling region, an option-content filling region and an answer-content filling region. The structured-question-test-content acquiring module includes:
a first quantity-and-position-information acquiring module, configured to recognize the text content of the question, and acquire the number of questions and initial position and end position of each question.
a first question splitting module, configured to acquire the text content of each question based on the quantity of questions and the initial position and end position of the each question.
a second text-content acquiring module, configured to structurally analyze the text content of the each question to acquire content of a question stem, option content and answer content of the each question.

The structured-question-test-content acquiring module includes a second question-text acquiring module, and the second question-text acquiring module is configured to fill the question-stem-content filling region, the option-content filling region and the answer-content filling region with the content of the question stem, the option content and the answer content respectively, and acquire the structured text content of the classroom activity corresponding to the target question template.

In an embodiment, when the courseware type identifier indicates a judgment question; the more than one structured filling region includes a question-stem-content filling region and an answer-content filling region. The structured-question-test-content acquiring module includes:
a first quantity-and-position-information acquiring module, configured to recognize the text content of the question, and acquire the number of questions and initial position and end position of each question.
a first question splitting module, configured to acquire the text content of the each question based on the number of questions and the initial position and the end position of the each question.
a third text-content acquiring module, configured to structurally analyze the text content of each question to acquire the question-stem content and answer content of each question.

The structured-question-test-content acquiring module includes a third question-text acquiring module, and the third question-text acquiring module is configured to fill the question-stem-content filling region and the answer-content filling region with the content of the question stem, the option content and the answer content respectively, and acquire the structured text content.

It should be noted that when the apparatus for producing courseware of a classroom activity according to the embodiment of the present disclosure executes the method of producing courseware of the classroom activity, it only uses the division of the above-mentioned functional modules as an example. In practical applications, the above functions may be assigned to different functional modules according to needs, that is, the internal structure of the device may be divided into different functional modules to complete all or part of the functions described above. In addition, the apparatus of producing courseware for a classroom activity according to the Embodiment 2 of the present disclosure and the method of producing courseware of the classroom activity according to the present disclosure belongs to the same idea, and reference is made to the method embodiment for the details of its implementation process, which will not be repeated herein.

### Embodiment 3

The following is a device embodiment of the present disclosure, which may be used to implement the content of the method in the Embodiment 1 of the present disclosure. Reference is made to the content of the method in the Embodiment 1 of the present disclosure for details, which are not disclosed in the apparatus embodiment of the present disclosure.

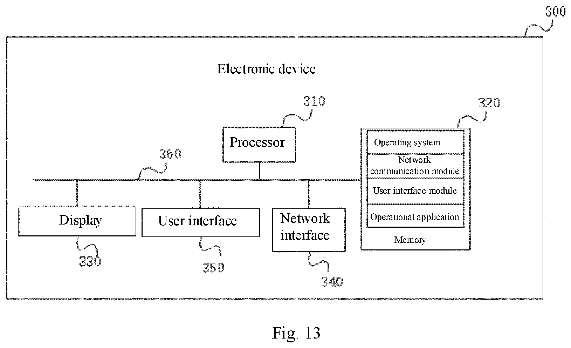

Referring to Fig. 13, according to the present disclosure, an electronic device 300 is further provided, and the electronic device 300 may be a computer, a mobile phone, a tablet computer, an interactive tablet, etc. In an exemplary embodiment of the present disclosure, the electronic device 300 is MOS transistor on-state loss acquisition device. The electronic device 300 may include: at least one processor 310, at least one memory 320, at least one display 330, at least one network interface 340, a user interface 350 and at least one communication bus 360.

The user interface 350 is mainly used for providing an input interface for the user, and acquiring data input by the user. Optionally, the user interface 350 may further include a standard wired interface and a wireless interface.

The network interface 340 may optionally include a standard wired interface and a wireless interface (such as a WI-FI interface).

The communication bus 360 is used to realize connection and communication between these components.

The processor 310 may include one or more processing cores. The processor 310 uses various interfaces and lines to connect various parts of the entire electronic device 300, and executes various functions of the electronic device 300 and processing data by running or executing instructions, programs, code sets or instruction sets stored in the memory 320, and calling data stored in the memory 320. Optionally, the processor 310 may be implemented in the form of at least one hardware such as Digital Signal Processing (DSP), Field-Programmable Gate Array (FPGA), and Programmable Logic Array (PLA). The processor 310 may integrate one or a combination of Central Processing Unit (CPU), Graphics Processing Unit (GPU), a modem, and the like. CPU mainly handles the operating system, user interface and application programs, etc. GPU is used for rendering and drawing the content that needs to be displayed on the display layer; the modem is used for processing wireless communication. It may be understood that, the above-mentioned modem may not be integrated into the processor 310, but may be realized by a single chip.

The memory 320 may include Random Access Memory (RAM), or may include Read-Only Memory). Optionally, the memory 320 includes a non-transitory computer-readable storage medium. The memory 320 may be used to store instructions, programs, codes, sets of codes, or sets of instructions. The memory 320 may include a program storage region and a data storage region. The program storage region may store instructions for implementing an operating system, instructions for at least one function (such as a touch function, a sound playback function, an image playback function, etc.), instructions and the like for implementing the above method embodiments; the storage data region may store the data involved in the above-mentioned method embodiments and the like. Optionally, the memory 320 may also be at least one storage device located away from the above-mentioned processor 310. As shown in Fig. 13, the memory 320 as a computer storage medium may include an operating system, a network communication module, a user interface module and operational application.

The processor 310 may be used to call the application program of the method of producing courseware for a classroom activity stored in the memory 320, and execute the method steps of Embodiment 1 shown above. The execution process may be seen in the description shown in Embodiment 1, which will not be repeated herein.

### Embodiment 4

According to the present disclosure, a computer-readable storage medium is further provided, on which computer program is stored. The instructions are suitable for being loaded by a processor and executing the method steps of the Embodiment 1 shown above. Reference is made to the specific execution process for details, which will not be repeated herein. The device where the storage medium is located may be an electronic device such as a personal computer, a notebook computer, a smart phone, or a tablet computer.

As for the device embodiment, since it basically corresponds to the method embodiment, reference is made to the part of the description of the method embodiment for related parts. The device embodiments described above are only illustrative, and the components described as separate components may or may not be physically separated, and the components shown as units may or may not be physical units, that is, they may be located in one place, or it may be distributed to multiple network elements. Part or all of the modules may be selected according to actual needs to achieve the purpose of the solution of the present disclosure. It may be understood and implemented by those skilled in the art without creative effort.

Those skilled in the art should understand that the embodiments of the present disclosure may be provided as a method, a system, or computer program product. Therefore, the present disclosure may adopt the form of a complete hardware embodiment, a complete software embodiment, or an embodiment combining software and hardware. Moreover, the present disclosure may adopt the form of computer program product implemented on one or more computer-usable storage media (which may include disk storage, CD-ROM, optical storage, etc.) containing computer-usable program codes.

The present disclosure is described with reference to flowcharts and/or block diagrams of methods, devices (systems), and computer program products in embodiments of the present disclosure. It should be understood that each process and/or block in the flowchart and/or block diagram, and the combination of processes and/or blocks in the flowchart and/or block diagram may be implemented by computer program instructions. These computer program instructions may be provided to the processor of a general-purpose computer, a special-purpose computer, an embedded processor, or other programmable data processing equipment to generate a machine, so that with the instructions executed by the processor of the computer or other programmable data processing equipment, a device that is configured to implement the functions specified in one process or multiple processes in the flowchart and/or one block or multiple blocks in the block diagram is generated.

These computer program instructions may also be stored in a computer-readable memory that may direct a computer or other programmable data processing equipment to work in a specific method, so that a series of operational steps is executed on a computer or other readable devices, and thus the instructions executed on the computer or other readable devices provide the steps of selected function in one flow or multiple flows in the flowchart and/or one block or multiple blocks in the block diagram.

In an optional configuration, the computing device includes one or more processors (CPUs), input/output interfaces, network interfaces, and memory.

The memory may include non-permanent memory, random access memory (RAM) and/or non-volatile memory, etc.in a computer-readable medium, such as read-only memory (ROM) or flash memory (flash RAM). The memory is an example of a computer-readable medium.

Computer-readable storage media include permanent and non-permanent, removable and non-removable media, and information storage may be achieved by any method or technology. The information may be computer-readable instructions, data structures, program modules, or other data. Examples of computer-readable storage media include, but are not limited to: phase change memory (PRAM), static random access memory (SRAM), dynamic random access memory (DRAM), other types of random access memory (RAM), read-only memory (ROM), electrically erasable programmable read-only memory (EEPROM), flash memory or other memories, compact disc read-only memory (CD-ROM), digital versatile disc (DVD) or other optical storage, magnetic cassette tape, magnetic disk storage or other magnetic storage devices or any other non-transmission media which may be configured to store information capable of being accessed by computing devices. According to the definition in the present disclosure, computer-readable media does not include transitory media, such as modulated data signals and carrier waves.

It should also be noted that the terms "include", "comprise" or any other variants thereof are intended to cover non-exclusive inclusion, so that a process, method, commodity or equipment including a series of elements not only includes those elements, but also includes other elements that are not explicitly listed, or also include elements inherent to such processes, methods, commodities, or equipment. If there are no more restrictions, the element defined by the sentence "including a..." does not exclude the existence of other identical elements in the process, method, commodity, or equipment that includes the element.

## Claims

1. A computer-implemented method for producing courseware of a classroom activity, comprising:
on a platform for producing the courseware of the classroom activity, in response to a triggering operation for producing the courseware of the classroom activity, displaying a page of producing courseware, and acquiring a target courseware-type identifier (S101);
acquiring text content of a question input on the page of producing the courseware (S102);
based on the target courseware-type identifier, acquiring a target structured analysis strategy correspondingly (S103);
based on the target structured analysis strategy, analyzing the text content of the question to acquire structured text content of the classroom activity (S104); wherein
based on the text content of the question, natural language processing and rule strategies are used to split the text content of the question; and
based on the structured text content of the classroom activity, generating the courseware of the classroom activity (S105); wherein
the target structured analysis strategy comprises a target structured analysis algorithm and a target question template, the target question template comprises more than one structured filling region, and
the based on the target structured analysis strategy, analyzing the text content of the question to acquire the structured text content of the classroom activity, comprises:
based on the target structured analysis algorithm, analyzing the text content of the question to acquire a plurality of structured text content; and
filling the structured filling region with the structured text content correspondingly, and acquiring the structured text content of the classroom activity corresponding to the target question template; wherein
when the target courseware-type identifier indicates a question of selecting words and filling blanks, the more than one structured filling region comprises a question-stem-content filling region, a blank filling region and a to-be-selected-word filling region, and
the based on the target structured analysis algorithm, analyzing the text content of the question to acquire the plurality of structured text content (S1041), comprises:
recognizing the text content of the question, and acquiring the number of candidate fill-in placeholders preset in the text content of the question of each type (S104111);
based on the number of the candidate fill-in placeholders preset in the text content of the question of each type, calculating confidence scores of the candidate fill-in placeholders of each type (S104112);
determining the candidate fill-in placeholder with the highest confidence score as a target fill-in placeholder, and acquiring position information of the target fill-in placeholder in the text content of the question (S104113); and
in the text content of the question, hollowing out the position corresponding to the position information as a space, determining the text at the position corresponding to the position information as a word to be selected, and determining other text as content of a question stem to acquire the plurality of structured text content (S104114),
the filling the structured filling region with the structured text content correspondingly, and acquiring the structured text content of the classroom activity corresponding to the target question template comprises:
filling the question-stem-content filling region, the blank filling region and the to-be-selected-word filling region with the content of the question stem, the space and the word to be selected respectively, and acquiring the structured text content of the classroom activity corresponding to the target question template (S10421); wherein
the based on the number of the candidate fill-in placeholders preset in the text content of the question of each type, calculating the confidence scores of the candidate fill-in placeholders of each type, comprises:
determining a product of preset priority scores of the candidate fill-in placeholders of each type and the number of the candidate fill-in placeholders preset in the text content of the question of each type as the confidence scores of the candidate fill-in placeholders of each type.

2. The method for producing the courseware of the classroom activity of claim 1, wherein the platform for producing the courseware of the classroom activity stores more than one courseware-type identifier for the classroom activity and structured analysis strategies corresponding to each of the courseware type identifiers for the classroom activity, and
the based on the target courseware-type identifier, acquiring the target structured analysis strategy correspondingly, comprises:
based on the target courseware-type identifier, querying on the platform for producing the courseware of the classroom activity to acquire the target structured analysis strategy corresponding to the target courseware-type identifier for the classroom activity.

3. The method for producing the courseware of the classroom activity of claim 1, wherein
when the target courseware-type identifier indicates a choice question; the more than one structured filling region comprises a question-stem-content filling region, an option-content filling region and an answer-content filling region,
the based on the target structured analysis algorithm, analyzing the text content of the question to acquire the plurality of structured text content, comprises:
recognizing the text content of the question, and acquiring the number of questions and initial position and end position of each question;
acquiring the text content of the each question based on the number of questions and the initial position and the end position of the each question; and
structurally analyzing the text content of the each question to acquire content of a question stem, option content and answer content of the each question,
the filling the structured filling region with the structured text content correspondingly, and acquiring the structured text content of the classroom activity corresponding to the target question template, comprises:
filling the question-stem-content filling region, the option-content filling region and the answer-content filling region with the content of the question stem, the option content and the answer content respectively, and acquiring the structured text content of the classroom activity corresponding to the target question template.

4. The method for producing the courseware of the classroom activity of claim 1, wherein
when the courseware type identifier indicates a judgment question; the more than one structured filling region comprises a question-stem-content filling region and an answer-content filling region,
the based on the target structured analysis algorithm, analyzing the text content of the question to acquire the plurality of structured text content, comprises:
recognizing the text content of the question, and acquiring the number of questions and initial position and end position of each question;
acquiring the text content of the each question based on the number of questions and the initial position and the end position of the each question; and
structurally analyzing the text content of the each question to acquire a content of a question stem and answer content of the each question,
the filling the structured filling region with the structured text content correspondingly, and acquiring the structured text content of the classroom activity corresponding to the target question template comprises:
filling the question-stem-content filling region and the answer-content filling region with the content of the question stem and the answer content in respectively, and acquiring the structured text content of the classroom activity corresponding to the target question template.

5. An apparatus for producing courseware of a classroom activity (200), comprising:
a page displaying module (201),
a question-text-content acquiring module (202),
an analysis-strategy acquiring module (203),
a structured-analysis module (204), and
a classroom-activity-courseware generating module (205), wherein the apparatus is configured to execute the method for producing the courseware of the classroom activity of any one of claims 1-4.

6. An electronic device (300), comprising:
a processor (310); and
a memory (320) storing a computer program,
wherein the computer program is adapted to be loaded by the processor (310) and execute the method for producing the courseware of the classroom activity of any one of claims 1-4.

7. A computer-readable storage medium, on which a computer program is stored, wherein the computer program, when executed by a processor (310), performs the method for producing the courseware of the classroom activity of any one of claims 1-4.

## Patentansprüche

1. Computerimplementiertes Verfahren zur Erzeugung von Kursunterlagen einer Unterrichtsaktivität, das Folgendes umfasst:
auf einer Plattform zur Erzeugung der Kursunterlagen der Unterrichtsaktivität, als Reaktion auf einen auslösenden Vorgang zur Erzeugung der Kursunterlagen der Unterrichtsaktivität, Anzeigen einer Seite zur Erzeugung von Kursunterlagen und Erfassen einer Ziel-Kursunterlagen-Typ-Kennung (S101);
Erfassen von Textinhalt einer Frage, die auf der Seite für die Erzeugung der Kursunterlagen (S102) eingegeben wird;
basierend auf der Ziel-Kursunterlagen-Typ-Kennung, entsprechendes Erfassen (S103) einer strukturierten Zielanalysestrategie;
basierend auf der strukturierten Zielanalysestrategie, Analysieren des Textinhalts der Frage, um strukturierten Textinhalt der Unterrichtsaktivität zu erfassen (S104); wobei
basierend auf dem Textinhalt der Frage natürliche Sprachverarbeitung und Regelstrategien verwendet werden, um den Textinhalt der Frage aufzuspalten; und
basierend auf dem strukturierten Textinhalt der Unterrichtsaktivität, Generieren der Kursunterlagen der Unterrichtsaktivität (S105); wobei
die strukturierte Zielanalysestrategie einen Algorithmus für die strukturierte Zielanalyse und eine Zielfragenvorlage umfasst, wobei die Zielfragenvorlage mehr als einen strukturierten Füllbereich umfasst, und
wobei das Analysieren des Textinhalts der Frage, um den strukturierten Textinhalt der Unterrichtsaktivität zu erfassen, basierend auf der strukturierten Zielanalysestrategie, Folgendes umfasst:
basierend auf dem Algorithmus für die strukturierte Zielanalyse, Analysieren des Textinhalts der Frage, um eine Vielzahl von strukturierten Textinhalten zu erfassen; und
entsprechendes Füllen des strukturierten Füllbereichs mit dem strukturierten Textinhalt und Erfassen des strukturierten Textinhalts der Unterrichtsaktivität entsprechend der Zielfragenvorlage; wobei
wenn die Ziel-Kursunterlagen-Typ-Kennung eine Frage zum Auswählen von Wörtern und zum Ausfüllen von Lücken angibt, der mehr als eine strukturierte Füllbereich einen Frage-Stamm-Inhaltsfüllbereich, einen Lücken-Füllbereich und einen Füllbereich für das auszuwählende Wort umfasst, und
das Analysieren des Textinhalts der Frage, um die Vielzahl von strukturierten Textinhalten zu erfassen (S1041), basierend auf dem Algorithmus für die strukturierte Zielanalyse, Folgendes umfasst:
Erkennen des Textinhalts der Frage und Erfassen der Anzahl der im Textinhalt der Frage jedes Typs voreingestellten Füll-Platzhalterkandidaten (S104111);
basierend auf der Anzahl der im Textinhalt der Frage jedes Typs voreingestellten Füll-Platzhalterkandidaten, Berechnen von Konfidenzwerten der Füll-Platzhalterkandidaten jedes Typs (S104112);
Bestimmen des Füll-Platzhalterkandidats mit dem höchsten Konfidenzwert als Ziel-Füll-Platzhalter, und Erfassen von Positionsinformationen des Ziel-Füll-Platzhalters im Textinhalt der Frage (S104113); und
in dem Textinhalt der Frage, Aushöhlen der Position, die den Positionsinformationen entspricht, als ein Leerzeichen, Bestimmen des Textes an der Position, die den Positionsinformationen entspricht, als ein auszuwählendes Wort, und Bestimmen von anderem Text als Inhalt eines Fragestammes, um die Vielzahl von strukturierten Textinhalten zu erfassen (S104114),
wobei das entsprechende Füllen des strukturierten Füllbereichs mit dem strukturierten Textinhalt und das Erfassen des strukturierten Textinhalts der Unterrichtsaktivität entsprechend der Zielfragenvorlage Folgendes umfasst:
Füllen des Frage-Stamm-Inhaltsfüllbereich, des Lücken-Füllbereichs und des Füllbereichs für das auszuwählende Wort mit dem Inhalt des Fragestamms, dem Leerraum beziehungsweise dem auszuwählenden Wort, und Erfassen des strukturierten Textinhalts der Unterrichtsaktivität entsprechend der Zielfragenvorlage (S10421); wobei
das Berechnen von Konfidenzwerten der Füll-Platzhalterkandidaten jedes Typs, basierend auf der Anzahl der im Textinhalt der Frage jedes Typs voreingestellten Füll-Platzhalterkandidaten, Folgendes umfasst;
Bestimmen eines Produkts aus voreingestellten Prioritätswerten der Füll-Platzhalterkandidaten jedes Typs und der Anzahl der in dem Textinhalt der Frage jedes Typs voreingestellten Füll-Platzhalterkandidaten als Konfidenzwerte der Füll-Platzhalterkandidaten jedes Typs.

2. Verfahren zur Erzeugung der Kursunterlagen der Unterrichtsaktivität nach Anspruch 1, wobei die Plattform zur Erzeugung der Kursunterlagen der Unterrichtsaktivität mehr als eine Kursunterlagen-Typ-Kennung für die Unterrichtsaktivität und strukturierte Analysestrategien speichert, die jeder der Kursunterlagen-Typ-Kennungen für die Unterrichtsaktivität entsprechen, und
das entsprechende Erfassen einer strukturierten Zielanalysestrategie, basierend auf der Ziel-Kursunterlagen-Typ-Kennung, Folgendes umfasst:
basierend auf der Ziel-Kursunterlagen-Typ-Kennung, Abfragen auf der Plattform zur Erzeugung der Kursunterlagen der Unterrichtsaktivität, um die strukturierte Zielanalysestrategie zu erhalten, die der Ziel-Kursunterlagen-Typ-Kennung für die Unterrichtsaktivität entspricht.

3. Verfahren zur Erzeugung der Kursunterlagen der Unterrichtsaktivität nach Anspruch 1, wobei, wenn die Ziel-Kursunterlagen-Kennung eine Auswahlfrage angibt, der mehr als eine strukturierte Füllbereich einen Frage-Stamm-Inhaltsfüllbereich, einen Options-Inhaltsfüllbereich und einen Antwort-Inhaltsfüllbereich umfasst,
das Analysieren des Textinhalts der Frage, um die Vielzahl von strukturierten Textinhalten zu erfassen, basierend auf dem Algorithmus für die strukturierte Zielanalyse, Folgendes umfasst:
Erkennen des Textinhalts der Frage und Erfassen der Anzahl der Fragen sowie der Anfangs- und Endposition jeder Frage;
Erfassen des Textinhalts jeder Frage basierend auf der Anzahl der Fragen und der Anfangs- und Endposition jeder Frage; und
strukturelles Analysieren des Textinhalts jeder Frage, um Inhalt eines Fragestamms, Optionsinhalt und Antwortinhalt jeder Frage zu erfassen,
wobei das entsprechende Füllen des strukturierten Füllbereichs mit dem strukturierten Textinhalt und das Erfassen des strukturierten Textinhalts der Unterrichtsaktivität entsprechend der Zielfragenvorlage Folgendes umfasst:
Füllen des Frage-Stamm-Inhaltsfüllbereichs, des Options-Inhaltsfüllbereichs und des Antwort-Inhaltsfüllbereichs mit dem Inhalt des Fragestamms, dem Optionsinhalt beziehungsweise dem Antwortinhalt, und Erfassen des strukturierten Textinhalts der Unterrichtsaktivität entsprechend der Zielfragenvorlage.

4. Verfahren zur Erzeugung der Kursunterlagen für die Unterrichtsaktivität nach Anspruch 1, wobei, wenn die Kursunterlagen-Typ-Kennung eine Beurteilungsfrage angibt; der mehr als eine strukturierte Ausfüllbereich einen Frage-Stamm-Inhaltsfüllbereich und einen Antwort-Inhaltsfüllbereich umfasst,
das Analysieren des Textinhalts der Frage, um die Vielzahl von strukturierten Textinhalten zu erfassen, basierend auf dem Algorithmus für die strukturierte Zielanalyse, Folgendes umfasst:
Erkennen des Textinhalts der Frage und Erfassen der Anzahl der Fragen sowie der Anfangs- und Endposition jeder Frage;
Erfassen des Textinhalts jeder Frage basierend auf der Anzahl der Fragen und der Anfangs- und Endposition jeder Frage; und
strukturelles Analysieren des Textinhalts jeder Frage, um einen Inhalt eines Fragestamms und Antwortinhalt jeder Frage zu erfassen,
wobei das entsprechende Füllen des strukturierten Füllbereichs mit dem strukturierten Textinhalt und das Erfassen des strukturierten Textinhalts der Unterrichtsaktivität entsprechend der Zielfragenvorlage Folgendes umfasst:
Füllen des Frage-Stamm-Inhaltsfüllbereichs und des Antwort-Inhaltsfüllbereichs mit dem Inhalt des Fragestamms beziehungsweise dem Antwortinhalt, und Erfassen des strukturierten Textinhalts der Unterrichtsaktivität entsprechend der Zielfragenvorlage.

5. Vorrichtung zur Erzeugung von Kursunterlagen einer Unterrichtsaktivität (200), umfassend:
ein Seitenanzeigemodul (201),
ein Frage-Text-Inhaltserfassungsmodul (202),
ein Analyse-Strategie-Erfassungsmodul (203),
ein Modul (204) zur strukturierten Analyse, und
ein Modul (205) zum Generieren von Unterrichtsaktivitäts-Kursunterlagen,
wobei die Vorrichtung dazu konfiguriert ist, das Verfahren zur Erzeugung der Kursunterlagen der Unterrichtsaktivität nach einem der Ansprüche 1 bis 4 auszuführen.

6. Elektronische Vorrichtung (300), umfassend:
einen Prozessor (310); und
einen Speicher (320), der ein Computerprogramm speichert,
wobei das Computerprogramm dazu angepasst ist, von dem Prozessor (310) geladen zu werden und das Verfahren zur Erzeugung der Kursunterlagen der Unterrichtsaktivität nach einem der Ansprüche 1 bis 4 auszuführen.

7. Computerlesbares Speichermedium, auf dem ein Computerprogramm gespeichert ist, wobei das Computerprogramm, wenn es von einem Prozessor (310) ausgeführt wird, das Verfahren zur Erzeugung der Kursunterlagen der Unterrichtsaktivität nach einem der Ansprüche 1 bis 4 durchführt.

## Revendications

1. Procédé implémenté par ordinateur de production d'un didacticiel d'une activité en classe, comprenant les étapes consistant à :
sur une plateforme de production du didacticiel de l'activité en classe, en réponse à une opération de déclenchement pour produire le didacticiel de l'activité en classe, afficher une page de production de didacticiel, et acquérir un identifiant de type de didacticiel cible (S101) ;
acquérir un contenu textuel d'une question entrée sur la page de production du didacticiel (S102) ;
sur la base de l'identifiant de type de didacticiel cible, acquérir une stratégie d'analyse structurée cible de manière correspondante (S103) ;
sur la base de la stratégie d'analyse structurée cible, analyser le contenu textuel de la question pour acquérir un contenu textuel structuré de l'activité en classe (S104) ; dans lequel
sur la base du contenu textuel de la question, un traitement du langage naturel et des stratégies de règle sont utilisés pour diviser le contenu textuel de la question ; et
sur la base du contenu textuel structuré de l'activité en classe, générer le didacticiel de l'activité en classe (S105) ; dans lequel
la stratégie d'analyse structurée cible comprend un algorithme d'analyse structurée cible et un modèle de question cible, le modèle de question cible comprend plus d'une région de remplissage structurée, et
l'analyse, sur la base de la stratégie d'analyse structurée cible, du contenu textuel de la question pour acquérir le contenu textuel structuré de l'activité en classe, comprend :
sur la base de l'algorithme d'analyse structurée cible, l'analyse du contenu textuel de la question afin d'acquérir une pluralité de contenus textuels structurés ; et
le remplissage de la région de remplissage structurée avec le contenu textuel structuré de manière correspondante, et l'acquisition du contenu textuel structuré de l'activité en classe correspondant au modèle de question cible ; dans lequel
lorsque l'identifiant de type de didacticiel cible indique une question concernant une sélection de mots et un remplissage de vides, les plus d'une région de remplissage structurée comprennent une région de remplissage de contenu de tronc de question, une région de remplissage de vides et une région de remplissage de mot à sélectionner, et
l'analyse, sur la base de l'algorithme d'analyse structurée cible, du contenu textuel de la question afin d'acquérir la pluralité de contenus textuels structurés (S1041), comprend :
la reconnaissance du contenu textuel de la question, et l'acquisition du nombre de substituts de remplissage candidats prédéfinis dans le contenu textuel de la question de chaque type (S104111) ;
sur la base du nombre des substituts de remplissage candidats prédéfinis dans le contenu textuel de la question de chaque type, le calcul de scores de confiance des substituts de remplissage candidats de chaque type (S104112) ;
la détermination du substitut de remplissage candidat ayant le score de confiance le plus élevé en tant que substitut de remplissage cible, et l'acquisition d'informations de position du substitut de remplissage cible dans le contenu textuel de la question (S104113) ; et
dans le contenu textuel de la question, le vidage de la position correspondant aux informations de position sous forme d'un espace, la détermination du texte à la position correspondant aux informations de position en tant que mot à sélectionner, et la détermination d'un autre texte en tant que contenu d'un tronc de question pour acquérir la pluralité de contenus textuels structurés (S104114),
le remplissage de la région de remplissage structurée avec le contenu textuel structuré de manière correspondante, et l'acquisition du contenu textuel structuré de l'activité en classe correspondant au modèle de question cible comprennent :
le remplissage respectif de la région de remplissage de contenu de tronc de question, de la région de remplissage de vides et de la région de remplissage de mot à sélectionner avec le contenu du tronc de question, l'espace et le mot à sélectionner, et l'acquisition du contenu textuel structuré de l'activité en classe correspondant au modèle de question cible (S10421) ; dans lequel
le calcule, sur la base du nombre des substituts de remplissage candidats prédéfinis dans le contenu textuel de la question de chaque type, des scores de confiance des substituts de remplissage candidats de chaque type, comprend :
la détermination d'un produit des scores de priorité prédéfinis des substituts de remplissage candidats de chaque type et du nombre des substituts de remplissage candidats prédéfinis dans le contenu textuel de la question de chaque type en tant que scores de confiance des substituts de remplissage candidats de chaque type.

2. Procédé de production du didacticiel de l'activité en classe selon la revendication 1, dans lequel la plateforme de production du didacticiel de l'activité en classe stocke plus d'un identifiant de type de didacticiel pour l'activité en classe et des stratégies d'analyse structurée correspondant à chacun des identifiants de type de didacticiel pour l'activité en classe, et
l'acquisition, sur la base de l'identifiant de type de didacticiel cible, de la stratégie d'analyse structurée cible de manière correspondante, comprend :
sur la base de l'identifiant de type de didacticiel cible, l'interrogation sur la plateforme de production du didacticiel de l'activité en classe afin d'acquérir la stratégie d'analyse structurée cible correspondant à l'identifiant de type de didacticiel cible pour l'activité en classe.

3. Procédé de production du didacticiel de l'activité en classe selon la revendication 1, dans lequel
lorsque l'identifiant de type de didacticiel cible indique une question de choix ; les plus d'une région de remplissage structurée comprennent une région de remplissage de contenu de tronc de question, une région de remplissage de contenu d'option et une région de remplissage de contenu de réponse,
l'analyse, sur la base de l'algorithme d'analyse structurée cible, du contenu textuel de la question pour acquérir la pluralité de contenus textuels structurés, comprend :
la reconnaissance du contenu textuel de la question, et l'acquisition du nombre de questions et de la position initiale et de la position finale de chaque question ;
l'acquisition du contenu textuel de chaque question sur la base du nombre de questions et de la position initiale et de la position finale de chaque question ; et
l'analyse structurelle du contenu textuel de chaque question afin d'acquérir un contenu d'un tronc de question, un contenu d'option et un contenu de réponse de chaque question,
le remplissage de la région de remplissage structurée avec le contenu textuel structuré de manière correspondante, et l'acquisition du contenu textuel structuré de l'activité en classe correspondant au modèle de question cible, comprennent :
le remplissage respectif de la région de remplissage de contenu de tronc de question, de la région de remplissage de contenu d'option et de la région de remplissage de contenu de réponse avec le contenu du tronc de question, le contenu d'option et le contenu de réponse, et l'acquisition du contenu textuel structuré de l'activité en classe correspondant au modèle de question cible

4. Procédé de production du didacticiel de l'activité en classe selon la revendication 1, dans lequel
lorsque l'identifiant de type de didacticiel indique une question de jugement ; les plus d'une région de remplissage structurée comprennent une région de remplissage de contenu de tronc de question et une région de remplissage de contenu de réponse,
l'analyse, sur la base de l'algorithme d'analyse structurée cible, du contenu textuel de la question pour acquérir la pluralité de contenus textuels structurés, comprend :
la reconnaissance du contenu textuel de la question, et l'acquisition du nombre de questions et de la position initiale et de la position finale de chaque question ;
l'acquisition du contenu textuel de chaque question sur la base du nombre de questions et de la position initiale et de la position finale de chaque question ; et
l'analyse structurelle du contenu textuel de chaque question afin d'acquérir un contenu d'un tronc de question et un contenu de réponse de chaque question,
le remplissage de la région de remplissage structurée avec le contenu textuel structuré correspondant, et l'acquisition du contenu textuel structuré de l'activité en classe correspondant au modèle de question cible, comprennent :
le remplissage respectif de la région de remplissage de contenu de tronc de question et de la région de remplissage de contenu de réponse avec le contenu du tronc de question et le contenu de réponse, et l'acquisition du contenu textuel structuré de l'activité en classe correspondant au modèle de question cible

5. Appareil pour produire un didacticiel d'une activité en classe (200), comprenant :
un module d'affichage de page (201),
un module d'acquisition de contenu textuel de question (202),
un module d'acquisition de stratégie d'analyse (203),
un module d'analyse structurée (204), et
un module générateur de didacticiel d'activité en classe (205), dans lequel l'appareil est configuré pour exécuter le procédé de production du didacticiel de l'activité en classe selon l'une quelconque des revendications 1 à 4.

6. Dispositif électronique (300), comprenant :
un processeur (310) ; et
une mémoire (320) stockant un programme informatique,
dans lequel le programme informatique est adapté pour être chargé par le processeur (310) et exécuter le procédé de production du didacticiel de l'activité en classe selon l'une quelconque des revendications 1 à 4.

7. Support de stockage lisible par ordinateur, sur lequel un programme informatique est stocké, dans lequel le programme informatique, lorsqu'il est exécuté par un processeur (310), effectue le procédé de production du didacticiel de l'activité en classe selon l'une quelconque des revendications 1 à 4.
